# EUROPEAN PATENT SPECIFICATION

(11) **EP 3 628 574 B1**
(45) Date of publication and mention of the grant of the patent: **03.08.2022**
(21) Application number: 19199695.8
(22) Date of filing: 25.09.2019
(51) Int. Cl.: B62D 33/073, F16C 1/10

(54) **MECHANICAL CONNECTOR FOR A VEHICLE**
MECHANISCHER VERBINDER FÜR EIN FAHRZEUG
CONNECTEUR MÉCANIQUE DE VÉHICULE

(30) Priority: 25.09.2018 IT 201800008903
(43) Date of publication of application: 01.04.2020
(73) Proprietor: IVECO MAGIRUS AG, 89079 Ulm (DE)
(72) Inventor: BLOMEIER, Dieter, 89257 ILLERTISSEN (DE)
(74) Representative: Faraldi, Marco

(56) References cited:
- FR-A1- 2 712 536
- FR-A1- 2 919 845
- JP-U- 3 114 666

## Description

### TECHNICAL FIELD

The present invention concerns a connector for a vehicle, in particular a mechanical connector for mechanical cables, e.g. Bowden cables, between a cab and chassis of a heavy vehicle.

### BACKGROUND OF THE INVENTION

Heavy vehicles such as trucks essentially comprises a cab carried by a chassis.

Such vehicle may comprise mechanical cables configured to functionally connect driving elements located in the cab to operating elements located in the chassis. An example of such connections are Bowden cables which connect gearshift lever with the gearbox.

Sometimes the cab needs to be tilt with respect to the chassis for maintenance reasons of the components which are located under the cab itself and which could not be reached for inspection by passing under the chassis.

Therefore, the user of the vehicle must disconnect all cables between cab and chassis before activating the tilting of the cab and then connect all these latter when the cab has come back to its neutral position.

In view of the above, the user waste a lot of time for each tilting operation.

Moreover, the disconnection and connection of the above mentioned cables may be difficult because the location of these cable connections between the cab and chassis are not easily reachable.

Examples of known connectors for cables of a vehicle are disclosed in FR2919845 A1, JP3114666 U or FR2712536 A1.

Therefore, the need is felt to provide an easier and quicker connection for the cables between cab and chassis of a heavy vehicle.

An aim of the present invention is to satisfy the above mentioned needs.

A further aim of the present invention is to satisfy the such needs in an optimized and cost-effective way.

### SUMMARY OF THE INVENTION

The aforementioned aim is reached by mechanical connector for a vehicle and a vehicle comprising such connector as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 is a perspective view of a vehicle comprising a cab and a chassis, the cab being in an open tilted position with respect to the chassis, and a mechanical connector according to the invention;
- Figure 2 is a section view, along a longitudinal plane, of the mechanical connector according to the invention in an opened configuration;
- Figure 3 is a section view, along a longitudinal plane, of the mechanical connector of Figure 2 in a closed configuration;
- Figure 4 comprises a top and bottom vertical views of two parts of the mechanical connector according to the invention;
- Figure 5 is a lateral view of the mechanical connector according to the invention in an opened configuration;
- Figure 6 is a lateral view of the mechanical connector of Figure 5 in a closed configuration; and
- Figures 7a-7c are top vertical views of the connector according to the invention in different operative conditions.

### DETAILED DESCRIPTION OF THE INVENTION

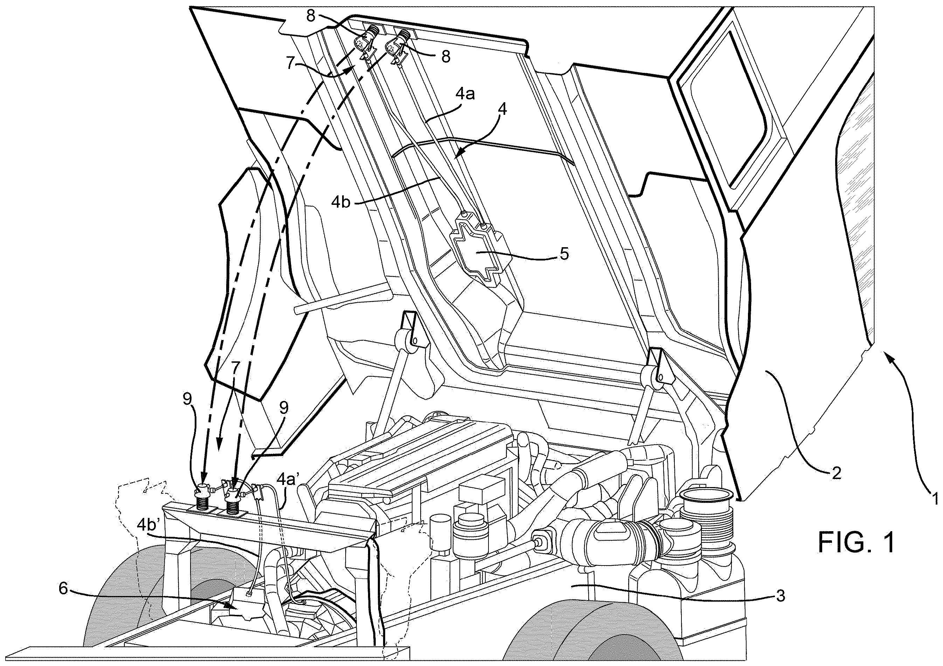

Figure 1 discloses a heavy vehicle 1 for road transport of goods, such as a truck, comprising, as known, a cab 2 and a chassis 3. As known in the art, cab 2 may be tilted with respect to chassis 3, e.g., pivoting on a front portion of this latter. Since such feature is widely known in the art, it will not be further described in detail.

Vehicle 1 further comprises mechanical cables 4 configured to connect driving elements 5 located in the cab 2 and operating elements 6 located in chassis 3. According to the described example the driving element 5 is a gearshift, the operating element 6 is a gearbox and cables 4 comprise in particular a pair of cables 4a, 4b, in detail right and left cables, carried by cab 2 and connected to driving element 5 and a pair of cables 4a', 4b', in detail right and left cables, carried by chassis 3 and connected to operating element 6.

Cables 4a, 4b, 4a', 4b' are preferably Bowden cables, i.e. known typology of cables which comprises terminal ball joints, a metallic cable fixedly joint to the terminal ball joints and a cover layer which surrounds the metallic cable. By moving a first terminal joint (e.g. by moving the lever of the gearshift, the opposite terminal joint is consequently driven in the same direction via metallic cable.

According to the invention, vehicle 1 comprises respective connectors 7 configured to automatically connect cables 4a', 4b' with cables 4a, 4b when cabin 2 is closed on chassis 3 and to automatically disconnect the aforementioned cables when cabin 2 tilts with respect to chassis 3.

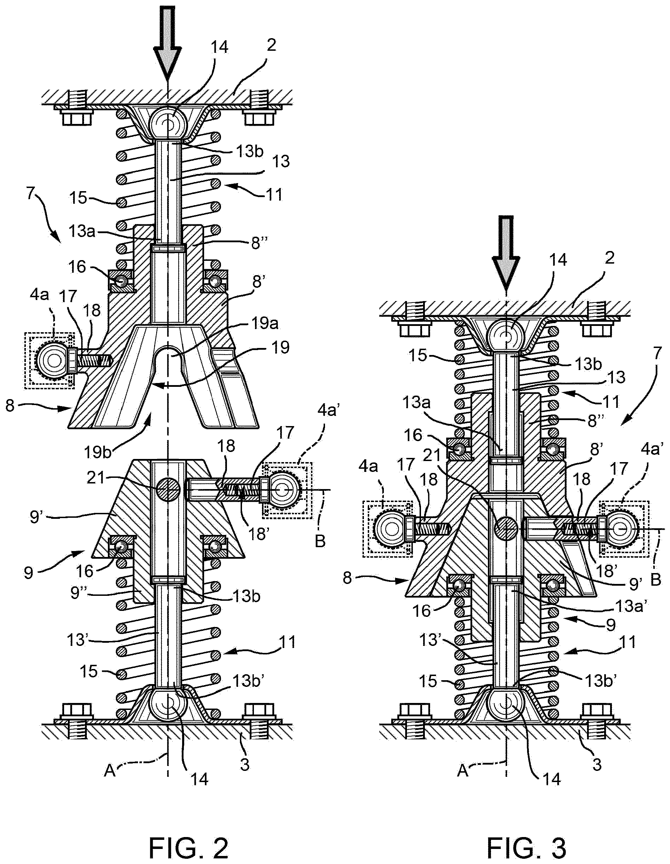

In greater detail, making reference to figures 2, 3, 4, 5 and 6, a connector 7 comprises a first element 8 carried by cabin 2 and a second element 9 carried by chassis 3; each of first and second elements 7, 8 is coupled respectively to one of cables 4a, 4b and to one of cables 4a', 4b'. Connector 7 further comprises locking means 10 configured to selectively couple first and second elements 7, 8 so that, when coupled, a movement imparted by one of cables 4a, 4b to first element 8 is given to second element 9 and consequently to cables 4a', 4b'.

Advantageously first and second elements 8, 9 are connected in a movable manner with respectively cab 2 and chassis 3 and they can preferably be connected to these latter via an elastic member 11 so as to dampen their contact during coupling of first and second elements 8, 9.

According to the described embodiment first and second elements 8, 9 are realized having a complementary shape so that the first element 8 may be shapely coupled with second element 9.

In particular first element 8 may comprise a main portion 8' which is hollow and having a substantially truncated-conical shape and second element 9 may comprise a main portion 9' which has a truncated-conical shape having an external surface configured to mate with the inner surface of main portion 8' of first element 8.

Each of first and second elements 8, 9 may further comprise a secondary portion 8", 9" extending axially from a terminal portion of first and second elements 8, 9 faced respectively to cab 2 and chassis 3. Preferably, such secondary portion 8", 9" may have a hollow and cylindrical shape. More preferably main and secondary portions 8', 8" and 9', 9" are respectively realized as one piece.

According to the described embodiment the movable connection between first and second elements 8, 9 and respectively cab 2 and chassis 3 allows at least a vertical movement of each of first and second elements 8, 9 and a rotation around a vertical axis A. According to the above described embodiment, axis A is the axis of axial-symmetry of the truncated-shaped main portions 8', 9' and of cylindrical shaped secondary portions 8", 9".

Vertical movement of first and second elements 8, 9 and respectively cab 2 and chassis 3 may be realized thanks to respective guides each comprising rods 13, 13' coupled to cab 2 and chassis 3. Rods 13, 13' comprise an extremity 13a, 13a' passing through an opening in first and second elements 8, 9 so as to slide inside the inner volume defined by secondary portions 8", 9". Ideally, such movement is limited at one side by a mechanical stop between extremity 13a, 13a' and secondary portions 8", 9", e.g. a shape coupling between these latter and at the opposite side by physical contact between cab 2 and chassis 3 with the respective secondary portion 8", 9".

Rotation about axis A may be realized by known joint of any typology, e.g. a ball joint connection 14 between an extremity 13b, 13b' of rods 13, 13' opposite to extremity 13a, 13a' and respectively cab 2 and chassis 3.

According to the described embodiment elastic member 11 may comprise a coil spring 15 connected at one end to secondary portion 8", 9" and to the opposite end to respectively cab 2 or chassis 3. In particular spring 15 surrounds secondary portions 8", 9" and rods 13, 13' and more preferably is coaxial to axis A. Spring 15 is configured to apply a force to maintain first and second elements 8, 9 vertically coupled together when cab 2 is closed positioned on chassis 3.

Optionally first and second elements 8, 9 may be provided with bearings 16, 16' configured to support the above described axial trust of spring 15 against first and second elements 8, 9. Bearings 16, 16' avoid any possible dissipation during a rotation about axis A of first and second elements 8, 9 due to friction of end of spring 15 and these latter. Preferably bearings 16, 16' are roller bearings.

As said, first element 8 is connected to a cable 4 and second element 9 is connected to a cable 4'. According to the described example, the terminal ball joint of cable 4 is fixedly connected to main portion 8' of first element 8 and the terminal ball joint of cable 4' is fixedly connected to main portion 9' of second element 9. Such connection may be realized e.g. via a connection elements 16, for sake of example a threaded element linked to the ball of the ball joint, configured to insert in a hole 17 realized in a protuberance 18 extending from the respective main portion 8', 9' towards the exterior. Preferably protuberance 18 is realized as one piece with the respective main portions 8', 9' .

In particular, protuberance 18 extends from lateral surface of the respective main portion 8', 9' coaxially to an axis B which is preferably perpendicular to axis A. Advantageously protuberance 18 of first element 8 is placed on opposite side, with respect to axis A, of protuberance 18 of the second element 9 so that, when first and second elements 8, 9 are coupled together, protuberances 18 are coaxially around respective axis B perpendicular to axis A.

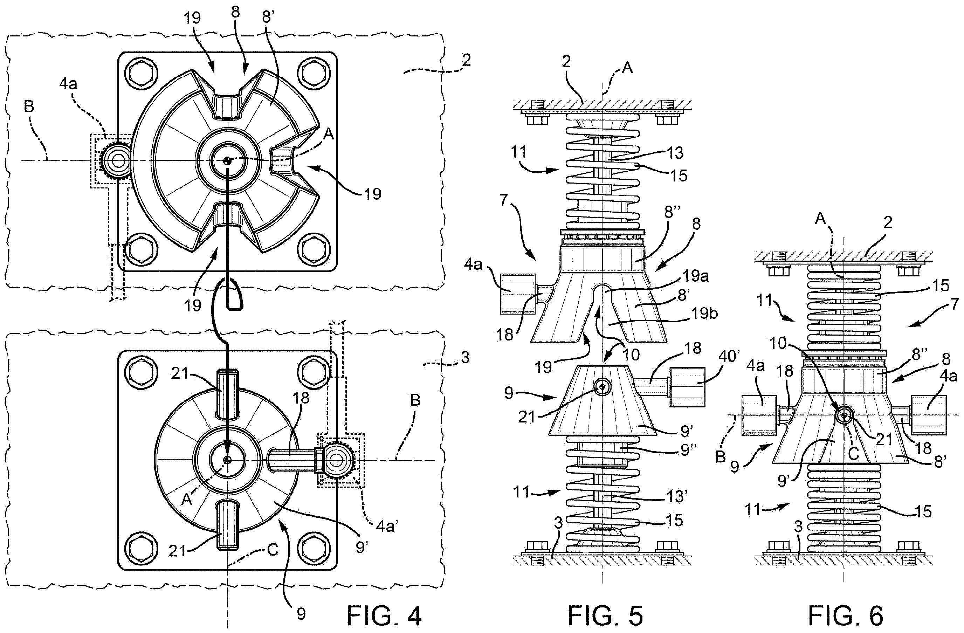

Consequently to the above, first element 8 comprises an opening 19, see in detail figures 4 to 6, configured to house, when coupled, protuberance 18. Opening 19 may comprise an apical portion 19a having a substantial circular arc perimeter and configured to mate with external surface of protuberance 18 and a tapered portion 19b extending, wider and wider, from the lower extremities of the perimeter of apical portion 19a towards the bottom of first element 18. Tapered portion 19b has preferably a symmetric shape with respect to axis A.

According to the described embodiment locking means 10 are configured to couple first and second elements 8, 9 so as to avoid any relative rotation between these latter.

In particular second element 9 may comprise a pair of protuberances 21 extending from lateral surface of main portion 9' towards the exterior and preferably opposite to each other and coaxial to an axis C which is perpendicular to both axis A and B. Consequently to the presence of such protuberances 21 extending from second element 9, first element 8 comprises further an additional pair of opening 19, which may comprise an apical portion 19a and a tapered portion 19b similar to the above described ones, configured to house the aforementioned protuberances 21.

Advantageously protuberances 21 may be realized as one piece in second element 9.

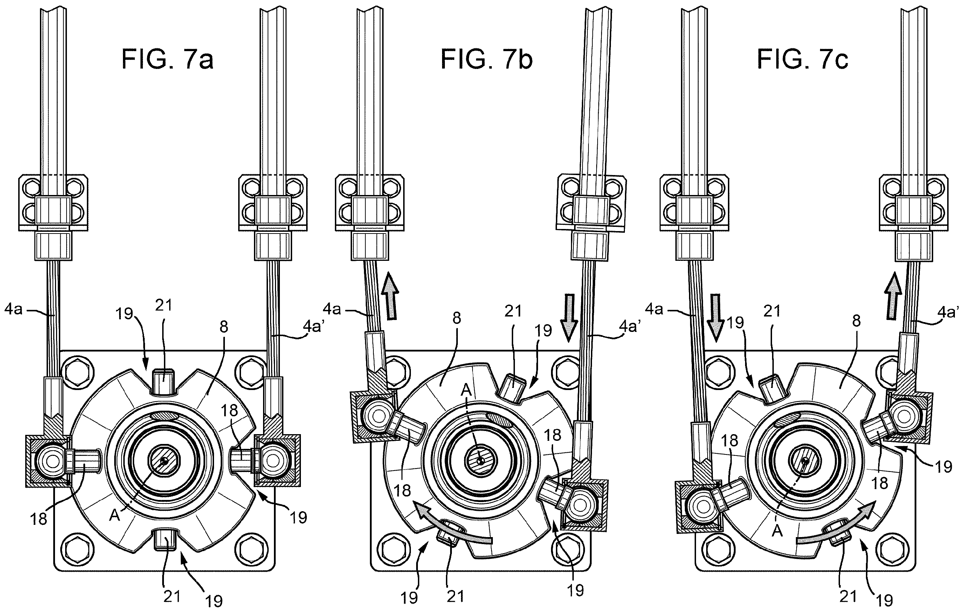

The operation of the connector according to the invention is described in the following, making reference to figures 7a-7c.

When cab 2 is tilted with respect to chassis 3, e.g. as shown in figure 1, first and second elements 8, 9 of connectors 7 are uncoupled.

When cab 2 return in standard operational closed position, first element 8 is coupled with second element 9, i.e. protuberances 18 and 21 are housed inside respective apical portions 19a of openings 19 and external surface of second element 9 is coupled with internal surface of first element 8. Such coupling is softened thanks to presence of elastic means 11 which counterbalance the contact forces between the two parts of connectors 7.

As stated in the description, in such configuration first and second elements 8, 9 can only rotate about axis A, since any vertical movement along axis A is avoided by the axial trust of elastic element 11 and any relative rotation being avoided thanks to the coupling of protuberances 21 inside respective openings.

In such coupled and neutral position, figure 7a, no movements occur. According to user's input, cable 4a may be retired inside its cover layer, as shown in figure 7b. Since terminal ball joint of cable 4a is fixedly coupled to first element 8, this latter is driven by the movement of cable 4a to rotate about axis A clockwise.

By rotating, first element 8 makes rotate second element 9 via mechanical coupling which is realized between protuberance 18 and opening 19 of first element 8. Then, movement of second element 9 draws terminal ball joint of cable 4a' which is fixedly coupled to second element 9.

Opposite situation may apply, as shown in figure 7c, in which cable 4a may be pushed out from its cover layer. Since terminal ball joint of cable 4a is fixedly coupled to first element 8, this latter is driven by the movement of cable 4a to rotate about axis A counterclockwise.

By rotating, first element 8 makes rotate second element 9 via mechanical coupling which is realized between protuberance 18 and opening 19 of first element 8. Then, movement of second element 9 draws terminal ball joint of cable 4a' which is fixedly coupled to second element 9. In view of the above, any movement of cable 4a (or 4a') is directly transmitted to cable 4a' (or cable 4a) thanks to the rotation of first and second elements 8, 9 about axis A.

When needed, user may tilt the cab 2 with respect to chassis 2; thus, protuberances 18, 21 will freely disengage their seats in apical portions 19a of openings 19 and first and second elements 8, 9 are separated automatically without any user intervention.

In view of the foregoing, the advantages of a connector 7 according to the invention are apparent.

Thanks to connector 7 is possible to couple and decouple in an automatic way mechcanical cables 4 when cab 2 tilts with respect to chassis 3.

The user of the vehicle has not to manually connect and decouple cables 4 thereby saving time and reducing probability of hurting himself during such operation.

The proposed connector 7 may be shaped for any typology of mechanical cable 4 and therefore may be provided also for other typology of moving parts of the vehicle which need mechanical cable connection.

Further, since connector 7 has reduced dimensions and may be fixed to cab 2 and chassis 3 in any position, it is possible to simplify the layout of mechanical cables paths.

Moreover, cables 4a', 4b' carried by chassis 3 may be standardized and positioned so as to have a reduced length, thereby increasing efficiency of mechanical transmission of the command imparted by the user.

It is clear that modifications can be made to the described connector 7 which do not extend beyond the scope of protection defined by the claims.

First, shape of first and second element 8, 9 may be varied according to cable and vehicle typology. Further elastic element 11, bearings 16, joint 14 and guide for vertical movement may be realized in any known alternative way.

It is further clear that protuberances 18, 21 may be realized as separate elements with respect to first and second elements 8, 9 and that openings 19 may have a different perimeter.

Movement degrees of freedom of first and second elements 8, 9 may be varied according to necessity of mechanical cables operation. Indeed, connector 7 could be shaped for connecting more cables 4 together and to allow different control paths of these latter.

## Claims

1. - Connector (7) for connecting mechanical cables (4) for a vehicle (1) said connector (7) comprising a first element (8) configured to be connected to a first portion (2) of a vehicle (1) and a second element (9) configured to be connected to a second portion (3) of said vehicle (1), each of said first and second elements (8, 9) being coupled to at least one respective mechanical cable (4a, 4b, 4a', 4b')
said first and second elements (8, 9) being configured to automatically couple and decouple mechanically one to the other according to the relative position of said first and second portions (2, 3) so that, when coupled, a movement imparted by one of said mechanical cables (4a, 4b, 4a', 4b') to one between said first and second elements (8, 9) is directly imparted to the other between said first and second elements (8, 9) and then to the respective mechanical cable (4a, 4b, 4a', 4b').
said connector (7) being **characterized by** comprising locking means (10) configured to selectively couple said first and said second element (8, 9) one to the other so that, when coupled, a movement imparted by one of said mechanical cable (4a, 4b, 4a', 4b') to one between said first and second elements (8, 9) is directly imparted to the other between said first and second elements (8, 9) and the to the respective mechanical cable (4a, 4b, 4a', 4b').

2. Connector according to claim 1, wherein said first and second element (8, 9) are connected by the respective vehicle portions in a movable manner.

3. Connector according to claim 2, wherein said movable manner connection allows at least a translational movement of said first and second element (8, 9)around a vertical axis (A) and said rotation about a vertical axis (A)

4. Connector according to any of claims 1 to 3, wherein said locking means (10) comprise a shape coupling between said first and said second elements (8, 9), said shape coupling avoiding a relative rotation between said first and second elements (8, 9).

5. Connector according to claim 4, wherein said shape coupling comprises at least a protrusion (18, 21) carried by one between said first and second elements (8, 9) and a seat (19) realized in the other between said first and second elements (8, 9).

6. Connector according to any of the preceding claims, wherein said connection between the first and second elements (8, 9) and the respective portions (2, 3) of vehicle (1) comprises elastic means (11) configured to impart a force to said first and second elements (8, 9), said force avoiding a relative translation between said first and second elements (8, 9).

7. Connector according to claim 6, wherein said elastic means (11) comprise a coil spring (15).

8. Connector according to any of the preceding claims, wherein said first and second elements (8, 9) have a complementary shape.

9. Connector according to any of the preceding claims, wherein said mechanical cables (4a, 4b, 4a', 4b') are Bowden cables.

10. Vehicle (1) comprising a first portion (2) and a second portion (3), said first portion (2) being configured to move relatively with respect to said second portion (3), said vehicle (1) further comprising mechanical cables (4) connecting a first element (5) carried by said first portion (2) to a second element (6) carried by said second portion (3) and a connector (7) according to any of the preceding claims and configured to automatically couple and decoupled said mechanical cables (4) according to the relative movement of said first portion (2) with respect to said second portion (3)

11. Vehicle according to claim 10, wherein said first portion is a cab (2) of said vehicle (1) and said second portion is a chassis (3) of said vehicle (1).

## Patentansprüche

1. Verbinder (7) zur Verbindung mechanischer Kabel (4) eines Fahrzeuges (1), wobei der Verbinder (7) ein erstes Element (8), konfiguriert, um mit einem ersten Bereich (2) des Fahrzeugs (1) verbunden zu werden, und ein zweites Element (9), konfiguriert um mit einem zweiten Bereich (3) des Fahrzeugs (1) verbunden zu werden, umfasst, wobei jedes der ersten und zweiten Elemente (8, 9) an jeweils mindestens ein mechanisches Kabel (4a, 4b, 4a', 4b') gekoppelt ist, wobei die ersten und zweiten Elemente (8, 9) konfiguriert sind, sich automatisch miteinander mechanisch zu koppeln und zu entkoppeln, je nach relativer Position des ersten und zweiten Bereichs (2, 3), sodass im gekoppelten Zustand eine Bewegung, die durch eines der mechanischen Kabel (4a, 4b, 4a', 4b') auf eines der ersten und zweiten Elemente (8, 9) induziert wird, direkt auf das andere der ersten und zweiten Elemente (8, 9) und anschließend auf das jeweilige mechanische Kabel (4a, 4b, 4a', 4b') übertragen wird, wobei der Verbinder (7) **dadurch gekennzeichnet ist, dass** der Verbinder Schließmittel umfasst (10), konfiguriert um selektiv das erste und das zweite Element (8, 9) miteinander zu koppeln, sodass im gekoppelten Zustand eine Bewegung, die durch eines der mechanischen Kabel (4a, 4b, 4a', 4b') auf eines der ersten und zweiten Elemente (8, 9) induziert wird, direkt auf das andere der ersten und zweiten Elemente (8, 9) und anschließend auf das jeweilige mechanische Kabel (4a, 4b, 4a', 4b') übertragen wird.

2. Verbinder nach Anspruch 1, wobei das erste und das zweite Element (8, 9) über die jeweiligen Bereiche des Fahrzeugs beweglich verbunden sind.

3. Verbinder nach Anspruch 2, wobei die bewegliche Verbindung mindestens eine Translationsbewegung des ersten und des zweiten Elements (8, 9) um eine vertikale Achse (A) erlaubt und eine Rotation um die vertikale Achse (A).

4. Verbinder nach einem der Ansprüche 1 bis 3, wobei die Schließmittel (10) eine formschlüssige Verbindung zwischen dem ersten und dem zweiten Element (8, 9) umfassen, wobei die formschlüssige Verbindung eine relative Rotation der ersten und zweiten Elemente gegeneinander verhindert.

5. Verbinder nach Anspruch 4, wobei die formschlüssige Verbindung mindestens einen Vorsprung (18, 21) umfasst, der von einem der ersten und zweiten Elemente getragen wird, und einen Sitz (19), realisiert im anderen der ersten und zweiten Elemente.

6. Verbinder nach einem der vorherigen Ansprüche, wobei die Verbindung zwischen den ersten und zweiten Elementen (8, 9) und den jeweiligen Bereichen (2, 3) des Fahrzeugs (1) elastische Mittel (11) umfasst, konfiguriert um eine Kraft auf die ersten und zweiten Elemente (8, 9) zu verteilen, wobei die Kraft eine relative Translation zwischen dem ersten und dem zweiten Element (8, 9) verhindert.

7. Verbinder nach Anspruch 6, wobei die elastischen Mittel (11) eine Schraubenfeder umfassen (15).

8. Verbinder nach einem der vorherigen Ansprüche, wobei das erste und das zweite Element (8, 9) komplementäre Formen aufweisen.

9. Verbinder nach einem der vorherigen Ansprüche, wobei die mechanischen Kabel (4a, 4b, 4a', 4b') Bowdenzüge sind.

10. Fahrzeug (1), umfassend einen ersten Bereich (2) und einen zweiten Bereich (3), wobei der erste Bereich (2) konfiguriert ist, sich relativ in Bezug auf den zweiten Bereich (3) zu bewegen, wobei das Fahrzeug des Weiteren mechanische Kabel (4) umfasst, die ein erstes Element (5), getragen vom ersten Bereich (2), mit einem zweiten Element (6), getragen vom zweiten Bereich (3), verbinden, sowie einen Verbinder (7) nach einem der vorherigen Ansprüche und konfiguriert, die mechanischen Kabel (4) automatisch, je nach der relativen Bewegung des ersten Bereichs (2) in Bezug auf den zweiten Bereich (3), zu koppeln und zu entkoppeln.

11. Fahrzeug nach Anspruch 10, wobei der erste Bereich ein Führerhaus (2) des Fahrzeugs (1) und der zweite Bereich ein Chassis (3) des Fahrzeugs (1) ist.

## Revendications

1. Connecteur (7) pour connecter des câbles mécaniques (4) pour un véhicule (1), ledit connecteur (7) comprenant un premier élément (8) configuré pour être connecté à une première partie (2) d'un véhicule (1) et un second élément (9) configuré pour être connecté à une seconde partie (3) dudit véhicule (1),
chacun desdits premier et second éléments (8, 9) étant couplé à au moins un câble (4a, 4b, 4a', 4b') respectif
lesdits premier et second éléments (8, 9) étant configurés pour automatiquement se coupler l'un de l'autre et se découpler l'un de l'autre mécaniquement en fonction de la position relative desdites première et seconde parties (2, 3) de telle sorte que, lorsqu'ils sont couplés, un déplacement transmis par l'un desdits câbles mécaniques (4a, 4b, 4a', 4b') à l'un entre lesdits premier et second éléments (8, 9) est directement transmis à l'autre entre lesdits premier et second éléments (8, 9) puis au câble mécanique (4a, 4b, 4a', 4b') respectif,
ledit connecteur (7) étant **caractérisé en ce qu'**il comprend un moyen de verrouillage (10) configuré pour coupler sélectivement ledit premier et ledit second élément (8, 9) l'un à l'autre de telle sorte que, lorsqu'ils sont couplés, un déplacement transmis par l'un desdits câbles mécaniques (4a, 4b, 4a', 4b') à l'un entre lesdits premier et second éléments (8, 9) est directement transmis à l'autre entre lesdits premier et second éléments (8, 9) et au câble mécanique (4a, 4b, 4a', 4b') respectif.

2. Connecteur selon la revendication 1, dans lequel lesdits premier et second éléments (8, 9) sont connectés par les parties de véhicule respectives d'une manière mobile.

3. Connecteur selon la revendication 2, dans lequel ladite connexion d'une manière mobile permet au moins un déplacement de translation desdits premier et second éléments (8, 9) autour d'un axe vertical (A) et ladite rotation autour d'un axe vertical (A).

4. Connecteur selon l'une quelconque des revendications 1 à 3, dans lequel ledit moyen de verrouillage (10) comprend un couplage de forme entre lesdits premier et second éléments (8, 9), ledit couplage de forme évitant une rotation relative entre lesdits premier et second éléments (8, 9).

5. Connecteur selon la revendication 4, dans lequel ledit couplage de forme comprend au moins une saillie (18, 21) portée par l'un entre lesdits premier et second éléments (8, 9) et un siège (19) réalisé dans l'autre entre lesdits premier et second éléments (8, 9) .

6. Connecteur selon l'une quelconque des revendications précédentes, dans lequel ladite connexion entre lesdits premier et second éléments (8, 9) et les parties (2, 3) respectives du véhicule (1) comprend un moyen élastique (11) configuré pour transmettre une force auxdits premier et second éléments (8, 9), ladite force évitant une translation relative entre lesdits premier et second éléments (8, 9) .

7. Connecteur selon la revendication 6, dans lequel ledit moyen élastique (11) comprend un ressort hélicoïdal (15).

8. Connecteur selon l'une quelconque des revendications précédentes, dans lequel lesdits premier et second éléments (8, 9) présentent une forme complémentaire.

9. Connecteur selon l'une quelconque des revendications précédentes, dans lequel lesdits câbles mécaniques (4a, 4b, 4a', 4b') sont des câbles Bowden.

10. Véhicule (1) comprenant une première partie (2) et une seconde partie (3), ladite première partie (2) étant configurée pour se déplacer relativement par rapport à ladite seconde partie (3), ledit véhicule (1) comprenant en outre des câbles mécaniques (4) connectant un premier élément (5) porté par ladite première partie (2) à un second élément (6) porté par ladite seconde partie (3) et un connecteur (7) selon l'une quelconque des revendications précédentes et configuré pour coupler et découpler automatiquement lesdits câbles mécaniques (4) en fonction du déplacement relatif de ladite première partie (2) par rapport à ladite seconde partie (3).

11. Véhicule selon la revendication 10, dans lequel ladite première partie est une cabine (2) dudit véhicule (1) et ladite seconde partie est un châssis (3) dudit véhicule (1).
